# EUROPEAN PATENT SPECIFICATION

(11) **EP 3 725 847 B1**
(45) Date of publication and mention of the grant of the patent: **24.04.2024**
(21) Application number: 19214082.0
(22) Date of filing: 06.12.2019
(51) Int. Cl.: C08L 69/00

(54) **ARTICLES MADE FROM HIGH HEAT, HIGH IMPACT POLYCARBONATE COMPOSITIONS AND METHOD OF MANUFACTURE**
AUS HOCHHITZEBESTÄNDIGEN, HOCHSCHLAGZÄHEN POLYCARBONATZUSAMMENSETZUNGEN HERGESTELLTE ARTIKEL UND VERFAHREN ZUR HERSTELLUNG
ARTICLES FABRIQUÉ À PARTIR D'UNE COMPOSITION DE POLYCARBONATE RÉSISTANT À LA CHALEUR ET À LA RÉSISTANCE À L'IMPACT ÉLEVÉ, ET PROCÉDÉ DE FABRICATION

(30) Priority: 04.01.2019 EP 19150307
(43) Date of publication of application: 21.10.2020
(73) Proprietor: SHPP Global Technologies B.V., 4612 PX Bergen op Zoom (NL)
(72) Inventor: FARRELL, Tony, 4612 PX Bergen op Zoom (NL)
(74) Representative: Modiano, Micaela Nadia

(56) References cited:
- WO-A1-2017/203480
- US-A1- 2007 191 518
- US-A1- 2013 313 493

## Description

### BACKGROUND

This disclosure is directed to articles comprising polycarbonate compositions, specifically glass filled, high heat, high impact polycarbonate compositions and their method of manufacture.

Materials used for electrical applications can require high heat resistance, high impact strength, and good flammability properties. The market is also moving towards articles having thin walls for purposes of weight and size reduction, for example. Polycarbonates have been used in the manufacture of articles and components for a wide range of applications, from automotive parts to electronic appliances. Polycarbonates generally have low heat resistance but good impact strength. This can be improved, for instance the document WO 2017/203480 A1 discloses an article comprising a polycarbonate composition, the composition comprising a BPA homopolycarbonate, a poly(carbonate-siloxane) copolymer, a high heat copolycarbonate, a flame retardant salt, glass fibers and an anti-drip agent.

There is a need for polycarbonate compositions that have high heat resistance, good impact strength, and good flammability properties in articles having thin wall thicknesses.

### SUMMARY

An article is provided, comprising a polycarbonate composition, the composition comprising up to 60 wt% of a bisphenol A homopolycarbonate composition comprising a bisphenol A homopolycarbonate having a weight average molecular weight from 15,000-40,000 grams/mole as measured via gel permeation chromatography using bisphenol A homopolycarbonate standards; 7-30 wt% of a poly(carbonate-siloxane); 10-70 wt%, preferably 10-50 wt% of a high heat copolycarbonate having a glass transition temperature of 170°C or higher as determined per ASTM D3418 with a 20 °C/min heating rate; 0.05-0.7 wt% of a flame retardant salt; 5-45 wt% of glass fibers; 0.3-0.6 wt%, of an anti-drip agent; and optionally, up to 10 wt% of an additive composition, wherein each amount is based on the total weight of the polycarbonate composition, which sums to 100 wt%; and wherein a molded sample of the polycarbonate composition has a Vicat B120 softening temperature of at least 150°C as measured according to ISO 306, an Izod notched impact strength of greater than or equal to 10 kiloJoule per square meter as measured at 23°C according to ISO 180/1 A, and a flame test rating of V1 as measured according to UL-94 at 0.8 millimeter (mm) and 1.2 mm thickness, preferably V0 at 1.2 mm.

A method for forming an article comprising the above-described polycarbonate composition is provided, the method comprising molding, casting, or extruding the article.

The above described and other features are exemplified by the following detailed description, examples, and claims.

### DETAILED DESCRIPTION

The inventors hereof have discovered a polycarbonate composition having all three of high heat resistance, high impact strength, and good flammability properties that are especially useful in thin-walled articles. The polycarbonate composition comprises a bisphenol A homopolycarbonate composition, a high heat copolycarbonate, a poly(carbonate-siloxane), a flame retardant salt, an anti-drip agent, and glass fibers. The polycarbonate composition can be used to prepare a wide variety of articles, including thin-walled articles. The polycarbonate composition provides a combination of the desired heat resistance, impact strength, and flammability properties for thin-walled articles, particularly for articles having a wall thickness of less than 1.5 mm. A molded sample of the polycarbonate composition has a Vicat B120 softening temperature of at least 150°C, preferably from 155-165°C as measured according to ISO 306, an Izod notched impact strength of greater than or equal to 10 kilojoule (kJ) per square meter (m²) as measured at 23°C according to ISO 180/1 A, and a flame test rating of V1 as measured according to UL-94 at 0.8 mm and 1.2 mm thickness, and preferably of V0 at 1.2 mm.

The polycarbonate composition comprises three different types of polycarbonate, a bisphenol A homopolycarbonate composition, a high heat copolycarbonate having a glass transition temperature of 170°C or higher as determined per ASTM D3418 with a 20 °C/min heating rate, and a poly(carbonate-siloxane).

"Polycarbonate" as used herein means a homopolymer or copolymer having repeating structural carbonate units of formula (1) 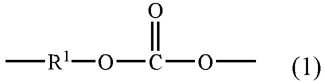 wherein at least 60 percent of the total number of R¹ groups are aromatic, or each R¹ contains at least one C₆₋₃₀ aromatic group.

In the bisphenol A homopolycarbonate, each R¹ in formula (1) is a unit derived from bisphenol A or a derivative thereof. The bisphenol A homopolycarbonate composition can be a single bisphenol A homopolycarbonate having a weight average molecular weight (Mw) of 15,000-40,000 grams/mole (g/mol), or 20,000-40,000 g/mol, or 15,000-40,000 g/mol, each as measured by gel permeation chromatography (GPC), using a crosslinked styrene-divinylbenzene column and calibrated to bisphenol A homopolycarbonate references. GPC samples are prepared at a concentration of 1 milligram (mg) per milliliter (ml) and are eluted at a flow rate of 1.5 ml per minute. In an aspect, the bisphenol A homopolycarbonate is a linear homopolymer containing bisphenol A carbonate units (BPA-PC), commercially available under the trade name LEXAN from SABIC.

The bisphenol A homopolycarbonate composition can include two or more bisphenol A homopolycarbonates. For example, the bisphenol A homopolycarbonate composition can include a first bisphenol A homopolycarbonate and a second bisphenol A homopolycarbonate that is different from the first bisphenol A homopolycarbonate. In a particular aspect, the first bisphenol A homopolycarbonate can have a weight average molecular weight of 20,000-30,000 g/mol, preferably 20,000-25,000 g/mol and the second bisphenol A homopolycarbonate can have a weight average molecular weight of 25,000-35,000 g/mol, preferably 27,000-32,000 g/mol, wherein Mw can be measured by GPC as described above.

The bisphenol A polycarbonate homopolymers can have an intrinsic viscosity, as determined in chloroform at 25°C, of 0.3-1.5 deciliters per gram (dl/gm), or 0.45-1.0 dl/gm.

"Polycarbonates" as used herein further includes copolymers comprising different R¹ moieties in the carbonate units of formula (1) ("copolycarbonates"), and copolymers comprising carbonate units of formula (1) and other types of polymer units, such as siloxane units.

In the high heat copolycarbonate, each R¹ is the same or different, provided that the R¹ groups include (a) a C₆₋₁₆ low heat divalent aromatic group derived from a low heat monomer, and (b) a C₁₇ or higher divalent group derived from a high heat monomer as further described below. In an aspect, R¹ each independently consists essentially, or consists of, (a) a bisphenol A divalent group and (b) a C₁₇ or higher divalent group derived from a high heat monomer as further described below.

The low heat bisphenol group can be of formula (2) 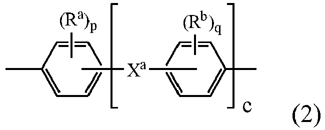 wherein R^{a} and R^{b} are each independently a halogen, C₁₋₃ alkoxy, or C₁₋₃ alkyl, c is 0 or 1, and p and q are each independently integers of 0 or 1. In an aspect, p and q is each 0, or p and q is each 1 and R^{a} and R^{b} are each a methyl, disposed meta to the bond on each arylene group. X^{a} in formula (2) is a bridging group connecting the two aromatic groups, where the bridging group and the bonds of each C₆ arylene group are disposed ortho, meta, or para (preferably para) to each other on the C₆ arylene group, for example, a single bond, -O-, -S-, -S(O)-, -S(O)₂-, -C(O)-, or a C₁₋₆ organic group, which can be cyclic or acyclic, aromatic or non-aromatic, and can further comprise heteroatoms such as halogens, oxygen, nitrogen, sulfur, silicon, or phosphorous. For example, X^{a} can be a C₃₋₆ cycloalkylene, a C₃₋₆ cycloalkylidene, a C₁₋₆ alkylidene of the formula -C(R^{c})(R^{d}) - wherein R^{c} and R^{d} are each independently hydrogen, C₁₋₅ alkyl, or a group of the formula -C(=R^{e})- wherein R^{e} is a divalent C₁₋₅ hydrocarbon group. Some illustrative examples of dihydroxy compounds that can be used as the low heat monomer are described, for example, in WO 2013/175448 A1, US 2014/0295363, and WO 2014/072923.

In an aspect, the low heat monomer is bisphenol A, which provides the low heat group of formula (2a).

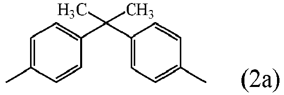

The high heat bisphenol group is derived from a high heat bisphenol monomer having at least 19 carbon atoms. As used herein, a high heat bisphenol monomer is a monomer where the corresponding homopolycarbonate of the monomer has a glass transition temperature (Tg) of 155°C or higher as determined per ASTM D3418 with a 20 °C/min heating rate.

Examples of such high heat bisphenol groups include groups of formulas (3)-(9). 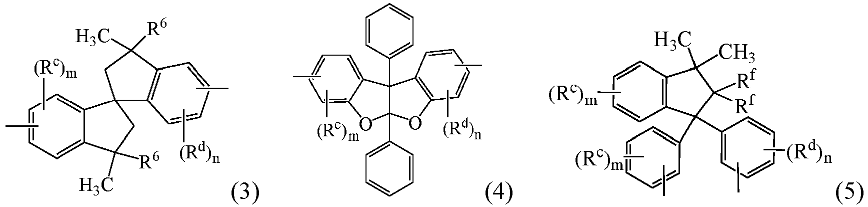 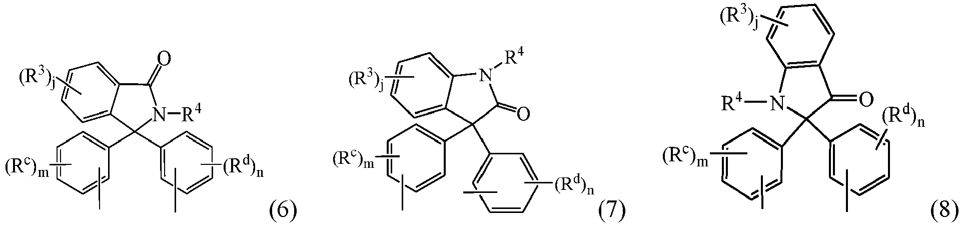 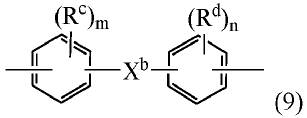 wherein R^{c} and R^{d} are each independently a C₁₋₁₂ alkyl, C₂₋₁₂ alkenyl, C₃₋₈ cycloalkyl, or C₁₋₁₂ alkoxy, each R^{f} is hydrogen or both R_{f} together are a carbonyl group, each R³ is independently C₁₋₆ alkyl, R⁴ is hydrogen, C₁₋₆ alkyl, or phenyl optionally substituted with 1 to 5 C₁₋₆ alkyl groups, R⁶ is independently C₁₋₃ alkyl, or phenyl, preferably methyl, X^{b} is a C₆₋₁₂ polycyclic aryl, C₃₋₁₈ mono- or polycycloalkylene, C₃₋₁₈ mono- or polycycloalkylidene, -C(R^{f})(R^{g})- wherein R^{f} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or - (Q^{a})ₓ-G-(Q^{b})_{y}- group, wherein Q^{a} and Q^{b} are each independently a C₁₋₃ alkylene, G is a C₃₋₁₀ cycloalkylene, x is 0 or 1, and y is 0 or 1, and j, m, and n are each independently 0 to 4. A combination of high heat aromatic groups can be used.

In an aspect, R^{c} and R^{d} are each independently a C₁₋₃ alkyl, or C₁₋₃ alkoxy, each R⁶ is methyl, each R³ is independently C₁₋₃ alkyl, R⁴ is methyl, or phenyl, each R⁶ is independently C₁₋₃ alkyl, or phenyl, preferably methyl, X^{b} is a C₆₋₁₂ polycyclic aryl, C₃₋₁₈ mono- or polycycloalkylene, C₃₋₁₈ mono- or polycycloalkylidene, -C(R^{f})(R^{g})- wherein R^{f} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or -(Q¹)ₓ-G-(Q²)_{y}-group, wherein Q¹ and Q² are each independently a C₁₋₃ alkylene and G is a C₃₋₁₀ cycloalkylene, x is 0 or 1, and y is 0 or 1, and j, m, and n are each independently 0 or 1.

Exemplary high heat bisphenol groups include those of formulas (7a) and (9a) to (9k). 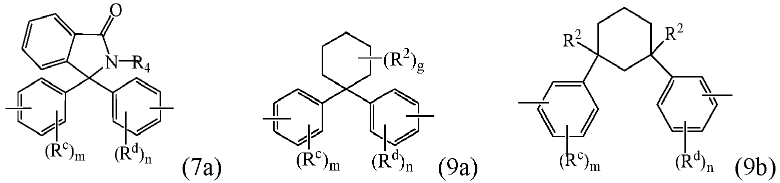 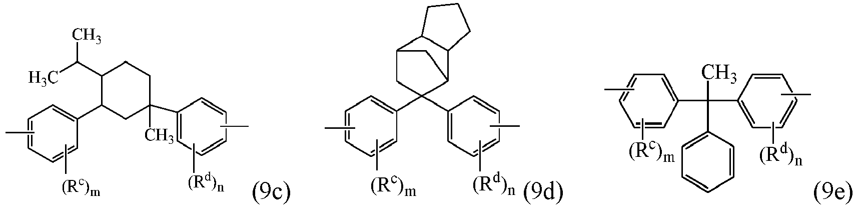 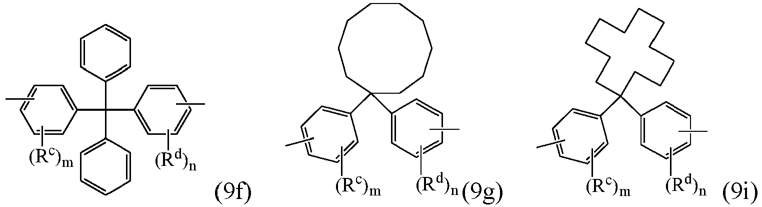 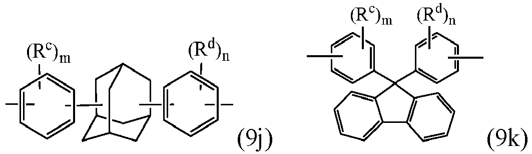 wherein R^{c} and R^{d} are the same as defined for formulas (3) to (9), each R² is independently hydrogen or C₁₋₄ alkyl, m and n are each independently 0 to 4, each R³ is independently C₁₋₄ alkyl or hydrogen, R⁴ is C₁₋₆ alkyl, or phenyl optionally substituted with 1 to 5 C₁₋₆ alkyl groups and g is 0 to 10. In a specific aspect each bond of the divalent group is located para to the linking group that is X^{a}. In an aspect, R^{c} and R^{d} are each independently a C₁₋₃ alkyl, or C₁₋₃ alkoxy, each R² is methyl, x is 0 or 1, y is 1, and m and n are each independently 0 or 1.

Preferably, the high heat aromatic group is derived the corresponding bisphenol, in particular from 3,8-dihydroxy-5a,10b-diphenyl-coumarano-2',3',2,3-coumarane, 4,4'-(3,3-dimethyl-2,2-dihydro-1H-indene-1,1-diyl)diphenol, 2-phenyl-3,3'-bis(4-hydroxyphenyl) phthalimidine (PPPBP), 1,1-bis(4-hydroxyphenyl)-3,3,5-trimethyl-cyclohexane (BPI), 4,4'-(1-phenylethylidene)bisphenol, 9,9-bis(4-hydroxyphenyl)fluorene, 1,1-bis(4-hydroxyphenyl)cyclododecane, or a combination thereof.

In another preferred aspect, the high heat aromatic group is preferably of formula (7b) or (9e-1) 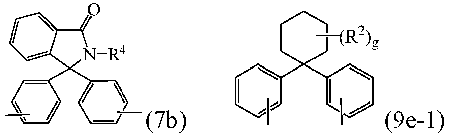 wherein R⁴ is methyl or phenyl, R⁴ is C₁₋₃ alkyl and g is 2-5. Most preferably the high heat bisphenol group is a PPPBP or BPI group.

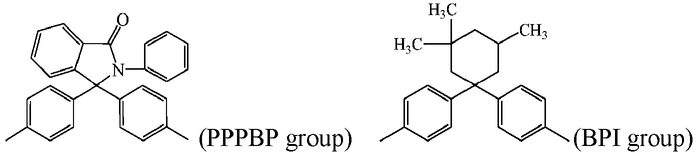

In the high heat copolycarbonates, the C₁₆ or higher divalent aromatic group (b) can be present in an amount of 10-90 mole percent (mol%), or 20-80 mol%, or 20-50 mol%, based on the total moles of the aromatic divalent groups (a) and the C₁₆ or higher divalent aromatic groups (b). The high heat copolycarbonates can have an Mw of 15,000-30,000 g/mol, as determined by GPC as described above.

The high heat copolycarbonate can be a copolymer, i.e., a copolycarbonate, comprising bisphenol A groups and high heat monomer groups, preferably PPPBP groups, BPI groups, or a combination thereof. The PPPBP or BPI groups can be present in an amount of 10-90 mol%, or 20-80 mol% of the copolycarbonate, preferably 25-40 mol%, based on the total moles of carbonate units. In an aspect, the bisphenol A-phthalimidine copolycarbonate is a diblock copolymer. These copolycarbonates can have an Mw of 15,000-30,000 g/mol.

The polycarbonate homopolymers and the copolycarbonates can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiary-butyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1, 1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05-2.0 wt. %. A combination of linear polycarbonates and branched polycarbonates can be used.

The composition can include a poly(carbonate-siloxane), also referred to in the art as a polycarbonate-polysiloxane copolymer. Poly(carbonate-siloxane)s have carbonate blocks of formula (1) wherein R¹ can be a low heat aromatic unit of formula (2) or a high heat aromatic unit of formulas (3-9). Preferably each R¹ is a low heat aromatic unit of formula (2), most preferably a bisphenol A unit. The polysiloxane blocks comprise repeating diorganosiloxane units as in formula (10) 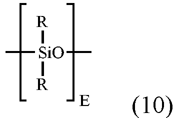 wherein each R is independently a C₁₋₁₃ monovalent organic group. For example, R can be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkyleneoxy, C₇₋₁₃ alkylarylene, or C₇₋₁₃ alkylaryleneoxy. The foregoing groups can be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups can be used in the same copolymer. In an aspect, each R is independently a C₁₋₆ monovalent organic group. For example, R can be a C₁₋₆ alkyl, C₁₋₆ alkoxy, C₂₋₆ alkenyl, C₂₋₆ alkenyloxy, C₃₋₆ cycloalkyl, C₃₋₆ cycloalkoxy, C₆ aryl, or C₆ aryloxy. In an aspect, each R is independently a C₁₋₃ monovalent organic group. For example, R can be a C₁₋₃ alkyl, C₁₋₃ alkoxy, C₂₋₃ alkenyl, C₂₋₃ alkenyloxy, C₃ cycloalkyl, or C₃ cycloalkoxy. In an aspect, each R is independently a C₁ monovalent organic group. For example, R can be a methyl or a methoxy. In a preferred aspect, R is methyl.

The value of E in formula (10) can vary widely depending on the type and relative amount of each component in the thermoplastic composition, the desired properties of the composition, and like considerations. Generally, E has an average value of 2 to 1,000, or 2 to 500, 2 to 200, or 2 to 125, 5 to 80, or 10 to 70. In an aspect, E has an average value of 10 to 80 or 10 to 40, and in still another aspect, E has an average value of 40 to 80, or 40 to 70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) can be used.

A combination of a first and a second (or more) poly(carbonate-siloxane)s can be used, wherein the average value of E of the first copolymer is less than the average value of E of the second copolymer.

In an aspect, the polysiloxane blocks are of formula (11) 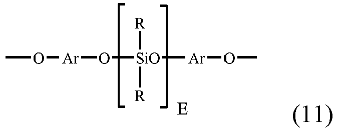 wherein E and R are as defined in formula (10) and Ar can be the same or different, and is a substituted or unsubstituted C₆₋₃₀ arylene, wherein the bonds are directly connected to an aromatic moiety. Ar groups in formula (11) can be derived from a C₆₋₃₀ dihydroxyarylene compound, for example a dihydroxyarylene compound of formula (2) or (5) above. Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations of at least one of the foregoing dihydroxy compounds can also be used.

In another aspect, polysiloxane blocks are of formula (12) 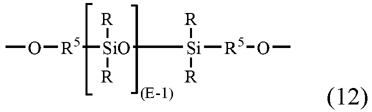 wherein E and R are as defined in formula (10), each R⁵ is independently a divalent C₁₋₃₀ organic group, and wherein the polymerized polysiloxane unit is the reaction residue of its corresponding dihydroxy compound. In a specific aspect, the polysiloxane blocks are of formula (13): 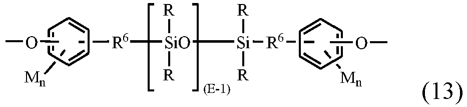 wherein Rand E are as defined in formula (10). R⁶ in formula (13) is a divalent C₂₋₈ aliphatic. Each M in formula (13) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ arylalkylene, C₇₋₁₂ arylalkyleneoxy, C₇₋₁₂ alkylarylene, or C₇₋₁₂ alkylaryleneoxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, R⁶ is a divalent C₁₋₃ aliphatic group. Specific polysiloxane blocks are of the formulas 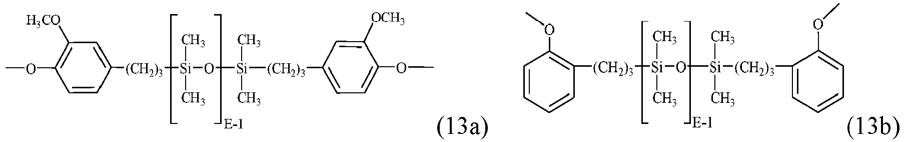 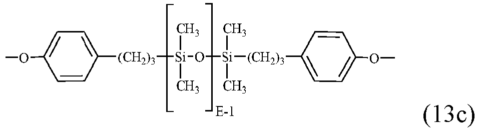 or a combination thereof, wherein E has an average value of 2-200, 2-125, 5-125, 5-100, 5-50, 20-80, or 5-20.

Blocks of formula (13) can be derived from the corresponding dihydroxy polysiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers can then be manufactured, for example, by the synthetic procedure of European Patent Application Publication No. 0 524 731 A1 of Hoover, page 5, Preparation 2.

The poly(carbonate-siloxane)s can comprise 50 to 99 wt% of carbonate units and 1-50 wt% siloxane units. Within this range, the poly(carbonate-siloxane) can comprise 70-98 wt%, or 75-97 wt% of carbonate units and 2-30 wt%, or 3-25 wt% siloxane units. In a preferred aspect, the polycarbonate is a poly(carbonate-siloxane) comprising bisphenol A carbonate units and dimethylsiloxane units, for example blocks containing 5-200 dimethylsiloxane units, such as those commercially available under the trade name EXL from SABIC.

Poly(carbonate-siloxane)s can have a weight average molecular weight of 2,000 to 100,000 Daltons, or 5,000 to 50,000 Daltons as measured by gel permeation chromatography using a crosslinked styrene-divinyl benzene column, at a sample concentration of 1 milligram per milliliter, and as calibrated with polycarbonate standards.

The poly(carbonate-siloxane)s can have a melt volume flow rate as measured at 300°C/1.2 kg, of 1-50 cubic centimeter per 10 minutes (cc/10 min), or 2 -30 cc/10 min. Mixtures of poly(carbonate-siloxane)s of different flow properties can be used to achieve the overall desired flow property.

The polycarbonate composition also comprises glass fibers. The glass fibers can be present from 5-50 wt%, from 5-45 wt%, from 10-40 wt%, from 10-35 wt%, from 10-30 wt%, from 5-15 wt%, or from 8-12 wt%. The term "glass" refers generally to a material, natural or synthetic, that contains silicon dioxide (SiO₂) or silica as its main material. The glass can be E, A, C, ECR, R, S, D, or NE glasses, or the like. The glass fiber may take any shape, for example elongated fibers or "whiskers," or glass flakes. The glass fibers can be provided in the form of monofilament or multifilament fibers and can be used individually or in combination with other types of fiber, through, for example, co-weaving or core/sheath, side-by-side, orange-type or matrix and fibril constructions, or by other methods known to one skilled in the art of fiber manufacture. Co-woven structures include glass fiber-carbon fiber, carbon fiber-aromatic polyimide (aramid) fiber, and aromatic polyimide fiberglass fiber or the like. Fibrous fillers can be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids. In an aspect, the glass fiber is a non-bonding glass fiber commercially available from Owens Corning.

The polycarbonate composition includes one or more flame retardant salts, for example salts of C₂₋₁₆ alkyl sulfonates such as potassium perfluorobutane sulfonate (Rimar salt), potassium perfluoroctane sulfonate, and tetraethylammonium perfluorohexane sulfonate, salts of aromatic sulfonates such as sodium benzene sulfonate, sodium toluene sulfonate (NaTS), and the like, salts of aromatic sulfone sulfonates such as potassium diphenylsulfone sulfonate (KSS), and the like; salts formed by reacting for example an alkali metal or alkaline earth metal and an inorganic acid complex salt, preferably an alkali metal or alkaline earth metal salt of carbonic acid or a fluoro-anion complex such as Li₃AlF₆, BaSiF₆, KBF₄, K₃AlF₆, KAlF₄, K₂SiF₆, or Na₃AlF₆. Rimar salt and KSS and NaTS, alone or in combination with other flame retardants, are particularly useful. In an aspect, the flame retardant salt does not contain phosphorous. In certain aspects, the flame retardant salt is a single aromatic sulfone sulfonate. In some aspects, the flame retardant salt is a combination of two or more sulfone sulfonates. Flame retardant salts are generally present in amounts of 0.05-0.7 wt% based on the total weight of the polycarbonate composition. In some aspects, the flame retardant salt is present in amounts of 0.3-0.6 wt% based on the total weight of the polycarbonate composition. In certain aspects, the flame retardant salt is present in amounts of 0.05-0.3 wt% based on the total weight of the polycarbonate composition. In an aspect, one or more aromatic sulfonate salts is preferably present in the polycarbonate composition in a total amount of 0.05-0.7, 0.05-0.3, or 0.3-0.6 wt% based on the total weight of the polycarbonate composition. In some aspects, Rimar salt, KSS, NaTS, or a combination thereof is present in a total amount of 0.05-0.7 wt%, 0.05-0.3 wt%, or 0.3-0.6 wt% based on the total weight of the polycarbonate composition.

The polycarbonate compositions include anti-drip agents, for example a fibril forming or non-fibril forming fluoropolymer such as polytetrafluoroethylene (PTFE). Preferably, the anti-drip agent can be encapsulated by a rigid copolymer as described above, for example styrene-acrylonitrile copolymer (SAN). PTFE encapsulated in SAN is known as TSAN. Encapsulated fluoropolymers can be made by polymerizing the encapsulating polymer in the presence of the fluoropolymer, for example an aqueous dispersion. TSAN can provide significant advantages over PTFE, in that TSAN can be more readily dispersed in the composition. A TSAN can comprise 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Alternatively, the fluoropolymer can be pre-blended in some manner with a second polymer, such as for, example, an aromatic polycarbonate or SAN to form an agglomerated material for use as an anti-drip agent. Either method can be used to produce an encapsulated fluoropolymer. Anti-drip agents are generally used in amounts of 0.3-0.6 wt%, based on the total weight of the polycarbonate composition.

In an aspect, the polycarbonate composition comprises up to 60 wt% of the bisphenol A homopolycarbonate composition; 10-30 wt% of the poly(carbonate-siloxane); 20-50 wt% of the high heat copolycarbonate; 0.3-0.6 wt% of an anti-drip agent; 5-45 wt% glass fibers; and 0.05-0.7 wt% of the flame retardant salt, wherein the polycarbonate composition comprises 2-4 wt% of siloxane.

In an aspect, the polycarbonate composition comprises a bisphenol A homopolycarbonate composition; a high heat copolycarbonate comprising at least one of carbonate units derived from bisphenol A and a high heat aromatic dihydroxy compound; a flame retardant salt that is a C₂₋₁₆ alkyl sulfonate, preferably potassium perfluorobutane sulfonate, potassium perfluoroctane sulfonate, or tetraethylammonium perfluorohexane sulfonate, a salt of an aromatic sulfonates preferably sodium benzene sulfonate or sodium toluene sulfonate, a salt of an aromatic sulfone sulfonate, preferably a potassium diphenylsulfone sulfonate, a salt formed by reacting an alkali metal or alkaline earth metal and an inorganic acid complex salt, preferably an alkali metal or alkaline earth metal salt of carbonic acid or a fluoro-anion complex such as Li₃AlF₆, BaSiF₆, KBF₄, K₃AlF₆, KAlF₄, K₂SiF₆, or Na₃AlF₆; and an anti-drip agent that is a styrene-acrylonitrile-encapsulated poly(tetrafluoroethylene) copolymer.

In a preferred aspect, the composition comprises up to 60 wt% of the bisphenol A homopolycarbonate composition comprising a first bisphenol A homopolycarbonate having a weight average molecular weight from 20,000-30,000 g/mol, preferably 20,000-25,000 g/mol and a second bisphenol A homopolycarbonate having a weight average molecular weight from 25,000-35,000 g/mol, preferably 27,000-32,000 g/mol, as measured via gel permeation chromatography using bisphenol A homopolycarbonate standards; 10-20 wt% of a poly(carbonate-siloxane) comprising 15-25 wt% siloxane; 20-30 wt% of a high heat copolycarbonate comprising bisphenol A carbonate units and high heat aromatic carbonate units derived from 1,1-bis(4-hydroxyphenyl)-3,3,5-trimethyl-cyclohexane, N-phenyl phenolphthalein bisphenol, or a combination thereof; 0.05-0.3 wt% of potassium perfluorobutane sulfonate, potassium diphenylsulfone sulfonate, sodium toluene sulfonate, or a combination thereof; 8-12 wt% of glass fibers; 0.01-1.0 wt% of a phosphite heat stabilizer; and 0.3-0.6 wt% of an anti-drip agent; wherein a molded sample of the polycarbonate composition has a Vicat B120 softening temperature of at least 150°C as measured according to ISO 306, an Izod notched impact strength of greater than or equal to 10 kJ per square meter as measured at 23°C according to ISO 180/1 A, and a flame test rating of V1 as measured according to UL-94 at 0.8 millimeter and 1.2 millimeter thickness.

In certain aspects, the composition comprises up to 60 wt% of a bisphenol A homopolycarbonate composition comprising a bisphenol A homopolycarbonate having a weight average molecular weight from 15,000-40,000 grams/mole as measured via gel permeation chromatography using bisphenol A homopolycarbonate standards; 7-25 wt% of a poly(carbonate-siloxane); 10-70 wt%, preferably 10-50 wt% of a high heat copolycarbonate having a glass transition temperature of 170°C or higher as determined per ASTM D3418 with a 20 °C/min heating rate; 0.05-0.5 wt% of a flame retardant salt; 5-15 wt% of glass fibers; 0.3-0.6 wt%, of an anti-drip agent; and optionally, up to 10 wt% of an additive composition, wherein each amount is based on the total weight of the polycarbonate composition, which sums to 100 wt%; and wherein a molded sample of the polycarbonate composition has a Vicat B 120 softening temperature of at least 150°C as measured according to ISO 306, an Izod notched impact strength of greater than or equal to 10 kiloJoule per square meter as measured at 23°C according to ISO 180/1 A, and a flame test rating of V1 as measured according to UL-94 at 0.8 millimeter thickness, and V0 as measured according to UL-94 at 1.2 millimeter thickness.

The polycarbonate composition can include various additives ordinarily incorporated into polymer compositions of this type, with the proviso that the additive(s) are selected so as to not significantly adversely affect the desired properties of the polycarbonate composition, in particular heat resistance and impact properties. Such additives can be mixed at a suitable time during the mixing of the components for forming the polycarbonate composition. Exemplary additives include fillers, reinforcing agents, antioxidants, heat stabilizers, light stabilizers, ultraviolet (UV) light stabilizers, plasticizers, lubricants, mold release agents, antistatic agents, colorants such as carbon black, and organic dyes, surface effect additives, radiation stabilizers, an anti-fog agent, and an antimicrobial agent. A combination of additives can be used, for example a colorant, a surface effect additive, a filler, a reinforcing agent, an antioxidant, a heat stabilizer, a light stabilizer, an ultraviolet light stabilizer, a plasticizer, a lubricant, a mold release agent, an antistatic agent, anti-fog agent, antimicrobial agent, a radiation stabilizer, or a combination thereof. The additives are used in the amounts generally known to be effective. For example, the total amount of the additives can be up to 10 wt%, preferably 0.01-5 wt%, based on the total weight of the polycarbonate composition.

In an aspect, the polycarbonate composition does not contain an impact modifier, such as an acrylonitrile-butadiene-styrene copolymer or a methyl methacrylate-butadiene-styrene copolymer.

In an aspect, the polycarbonate composition does not include titanium dioxide.

In an aspect, the additive composition comprises or consists of a heat stabilizer, an antioxidant, a mold release agent, an ultraviolet stabilizer, or a combination thereof.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or a combination thereof. The heat stabilizer can be tris(2,4-di-tert-butylphenyl) phosphite available as IRGAPHOS 168. Heat stabilizers are generally used in amounts of 0.01-5 wt%, based on the total weight of polycarbonate composition.

Antioxidant additives include organophosphites such as tris(nonyl phenyl)phosphite, tris(2,4-di-tert-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or a thereof. Antioxidants are typically used in amounts of 0.01-0.1 wt%, based on the total weight of the polycarbonate composition.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4-phenylene)bis(4H-3,1-benzoxazin-4-one, commercially available under the trade name CYASORB UV-3638 from Cytec), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB 5411 from Cytec) or a combination thereof. The UV stabilizers can be present in an amount of 0.01 to 1 wt%, or, 0.1 to 0.5 wt%, or 0.15 to 0.4 wt%, each based on the total weight of polymer in the composition.

Plasticizers, lubricants, or mold release agents can also be used. There is considerable overlap among these types of materials, which include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol A; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination thereof, e.g., methyl stearate and polyethylene-polypropylene glycol copolymer in a suitable solvent; waxes such as beeswax, montan wax, paraffin wax, or the like. Such materials are generally used in amounts of 0.01 to 1.0 wt%, based on the total weight of the composition.

In an aspect, a method for the manufacture of the polycarbonate composition comprises melt-mixing the components of the polycarbonate composition. The polycarbonates and polycarbonate compositions can be formulated by various methods known in the art. For example, powdered polycarbonates, and other optional components are first blended, optionally with any fillers, in a high speed mixer or by hand mixing. The blend is then fed into the throat of a twin-screw extruder via a hopper. Alternatively, at least one of the components can be incorporated into the polycarbonate composition by feeding it directly into the extruder at the throat or downstream through a sidestuffer, or by being compounded into a masterbatch with a desired polymer and fed into the extruder. The extruder is generally operated at a temperature higher than that necessary to cause the polycarbonate composition to flow. The extrudate can be immediately quenched in a water bath and pelletized. The pellets so prepared can be one-fourth inch long or less as desired. Such pellets can be used for subsequent molding, shaping, or forming.

In an aspect, a method for forming an article comprises molding, casting, or extruding the polycarbonate composition to form the article.

Shaped, formed, or molded articles comprising the polycarbonate compositions are also provided. The polycarbonate compositions can be molded into useful shaped articles by a variety of methods, such as injection molding, extrusion, rotational molding, blow molding, and thermoforming. The article can be a molded article, a thermoformed article, an extruded film, an extruded sheet, a foamed article, a layer of a multi-layer article, a substrate for a coated article, or a substrate for a metallized article.

The article can be in the form of a component, which can be a molded housing. The component can be an electrical circuit housing. The component can be an electrical device component, a medical device component, or a housing component for an electrical device, a vehicle light, a cell phone, a computer, a docking station, a personal data assistant (PDA), a MP3 player, a global positioning satellite (GPS) module, a circuit breaker case, or the like. Specific examples of components include computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like. The articles, polycarbonate compositions, and methods are further illustrated by the following non-limiting examples.

### EXAMPLES

The following components are used in the examples. Unless specifically indicated otherwise, the amount of each component is in wt%, based on the total weight of the polycarbonate composition.

The materials shown in Table 1 were used.

**Table 1.**

| Component | Description | Source |
|---|---|---|
| PC-1 | Linear bisphenol A polycarbonate produced by interfacial polymerization, Mw = 21,000-23,000 g/mol, having a melt flow rate of about 6 grams per 10 minutes at 300°C and 1.2 kilogram load | SABIC |
| PC-2 | Linear bisphenol A polycarbonate produced by interfacial polymerization, Mw = 28,000-30,900 g/mol, having a melt flow rate of about 30 grams per 10 minutes at 300ºC and 1.2 kilogram load | SABIC |
| PC-3 | PPPBP (N-Phenylphenolphthaleinylbisphenol, 2,2-bis(4-hydro) - bisphenol A copolycarbonate, 32 mol % PPPBP, Mw 23,000 g/mol interfacial polymerization, PCP end-capped, PDI = 2-3, available as XHT | SABIC |
| PC-Si | PDMS (polydimethylsiloxane) - bisphenol A polycarbonate copolymer, produced via interfacial polymerization, 20 wt% siloxane, average PDMS block length of 45 units (D45), Mw = 29,000-31,000 g/mol, as determined by GPC using bisphenol A homopolycarbonate standards, para-cumylphenol (PCP) end-capped, PDI = 2-3 | SABIC |
| KSS | Potassium diphenylsulfone sulfonate | Arichem LLC |
| PETS | Pentaerythritol tetrastearate | Faci |
| TSAN | Styrene-acrylonitrile (SAN)-encapsulated PTFE | SABIC |
| NaTS | Sodium p-toluenesulfonate | Arichem LLC |
| Phosphite | Tris(2,4-di-tert-butylphenyl)phosphite | Ciba |
| UVA | 2-(2-Hydroxy-5-t-octylphenyl) benzotriazole, available as UVA 5411 | UVA Hunan |
| NBGF | Non-binding fiberglass | Owens Corning |

The samples were prepared as described below and the following test methods were used.

Extrusion for all blends was performed on a 25 mm twin-screw extruder, using a nominal melt temperature of 280-320°C and 300 revolutions per minute (rpm). All powder additives were blended together with the PC powders using a paint shaker and fed through one feeder. The glass fiber was fed separately through a down-stream feeder.

Granulate was dried for 3 h at 120°C. Test specimens were produced from the dried pellets and were injection-molded at nominal temperatures of 300-320°C to form specimens for most of the tests below.

Heat deformation under pressure (BPT) was measured using ball pressure tests performed on the ends of 4 mm tensile bars, in accordance with the IEC 60695 standard at various temperatures. The results are in millimeter (mm) at a specific temperature or as an approximate pass temperature. The pass temperature was determined by extrapolation of the data at various temperatures to the temperature at which the width of the dent was 2 mm.

Heat distortion temperatures (HDT) were determined in accordance with the ISO-75 standard with a 5.5 J hammer, using the flat side of 4 mm ISO bars and a load of 1.8 MPa (A/f).

Impact resistance was determined by ISO-180 with a 5.5 J hammer. Ductility was expressed as a percentage of the bars showing failure. Five bars were tested for each composition.

Melt volume rates (MVR) were measured in accordance with the ISO-1133 standard at 250°C under a load of 5 kg with residence time of 5 minutes. The granules were dried for 3 hours at 120°C.

Vicat softening temperatures were measured on 4 mm ISO bars in accordance with the ISO-306 standard at a load of 10 N and a speed of 50°/hr (A50) or a load of 50 N and a speed of 120°C/hr (B120).

Flammability was determined by using the UL-94 standard. Vx vertical flammability tests were performed at 0.8 mm. Total flame-out (FOT) for all 5 bars was: FOT = t1 + t2. V-ratings obtained for every set of 5 bars, according to the criteria in Table 2.

**Table 2**

| | t₁ and/or t₂ | 5-bar FOT | burning drips |
|---|---|---|---|
| V0 | <10 | <50 | No |
| V1 | <30 | <250 | No |
| V2 | <30 | <250 | yes |
| N.R. (no rating) | >30 | >250 | |

The formulations and properties of Comparative Examples 1-4 (CEx 1-4) and Examples 1-4 (Ex 1-4) are shown in Table 3.

**Table 3.**

| Component (%) | | Units | CEx1 | CEx2 | Ex1 | CEx3 | CEx4 | Ex2 | Ex3 | Ex4 |
|---|---|---|---|---|---|---|---|---|---|---|
| PC-1 | | % | 51.15 | 28 | 53.85 | 28.4 | 28.3 | 28.2 | 28 | 27.6 |
| KSS | | % | 0.5 | 0.5 | 0.5 | 0.16 | 0.16 | 0.16 | 0.16 | 0.16 |
| TSAN | | % | | 0.2 | 0.5 | 0.1 | 0.2 | 0.3 | 0.5 | 0.9 |
| NaTS | | % | 0.15 | 0.15 | 0.15 | 0.06 | 0.06 | 0.06 | 0.06 | 0.06 |
| AO | | % | 0.05 | 0.05 | 0.05 | 0.05 | 0.05 | 0.05 | 0.05 | 0.05 |
| UVA | | % | 0.15 | 0.15 | 0.15 | 0.15 | 0.15 | 0.15 | 0.15 | 0.15 |
| PC-2 | | % | | | | 23.08 | 23.08 | 23.08 | 23.08 | 23.08 |
| NBFG | | % | 9 | 9 | 9 | 9 | 9 | 9 | 9 | 9 |
| PC-Si | | % | 12 | 12 | 12 | 12 | 12 | 12 | 12 | 12 |
| PC-3 | | % | 27 | 27 | 27 | 27 | 27.0 | 27 | 27 | 27 |
| Total | | % | 100 | 100 | 100 | 100 | 100 | 100 | 100 | 100 |

| Properties | | | | | | | | | | |
|---|---|---|---|---|---|---|---|---|---|---|
| MVR at 300°C, 1.2 kg, 300 see | | cm710 min | 9.8 | 7.1 | 6.2 | 6.9 | 6.0 | 5.6 | 4.7 | 3.4 |
| MVR at 330°C, 1.2 kg, 300 see | | cm710 min | 26.5 | 21.3 | 18.1 | 22.2 | 19.6 | 18 | 16.2 | 13.5 |
| BPT (150°C) | | | Pass | Pass | Pass | Pass | Pass | Pass | Pass | Pass |
| VICAT (B/120) | | °C | 158 | 157 | 157 | 159 | 158 | 157 | 157 | 155 |
| IZOD INI (3 mm, 23°C) | | kJ/m² | 13 | 14 | 13 | 16 | 15 | 15 | 15 | 15 |
| | | | | | | | | | | |
| UL-94 at 0.8 mm | FOT 23°C, 48 hr | | | | | | | | | |
| | S t1 | s | 29 | 30 | 50 | 68 | 44 | 41 | 27 | 24 |
| | S t2 | s | 20 | 75 | 41 | 34 | 49 | 36 | 45 | 61 |
| | S (t1 + t2) | s | 49 | 105 | 91 | 102 | 93 | 77 | 72 | 85 |
| | V-rating | | V2 | V2 | V1 | V2 | V2 | V1 | V1 | V1 |
| UL-94 at 1.2 mm | FOT 23°C, 48 hr | | | | | | | | | |
| | S t1 | s | 46 | 15 | 20 | 22 | 12 | 19 | 15 | 7 |
| | S t2 | s | 23 | 42 | 39 | 31 | 30 | 36 | 23 | 18 |
| | S (t1 + t2) | s | 69 | 57 | 59 | 53 | 42 | 55 | 38 | 25 |
| | V-rating | | V2 | V1 | V1 | V1 | V1 | V0 | V0 | V0 |

As can be seen from the data in Table 3, the addition of the TSAN and a decrease in the amount of the flame retardant salt lead to an improved UL-94 rating at both 0.8 mm and 1.2 mm. It also improved the robustness of the non-dripping compositions, as evidenced by the lower flame out times. At high loadings of TSAN, beyond 0.09% (data not shown), there was a large decrease in MVR, which could limit the practical use of compositions having greater than 0.09% TSAN in thin wall applications. Therefore, to avoid decreases in MVR, loadings of TSAN were maintained below 0.9%.

The formulations and properties of preferred aspects are shown in Table 4. Comparison of Example 3 (Ex 3, Runs 1 and 2) and Example 5 (Ex 5) show the effect of modifying the viscosity of the composition.

**Table 4.**

| Component (%) | | Units | Ex3-Run 1 | Ex5 | Ex3-Run 2 | Ex6 | Ex7 | Ex8 |
|---|---|---|---|---|---|---|---|---|
| PC-1 | | % | 28.08 | 51.08 | 28 | 28 | 28 | 28 |
| KSS | | % | 0.16 | 0.16 | 0.16 | 0.16 | 0.16 | 0.16 |
| TSAN | | % | 0.5 | 0.5 | 0.5 | 0.5 | 0.5 | 0.5 |
| NaTS | | % | 0.06 | 0.06 | 0.06 | 0.06 | 0.06 | 0.06 |
| AO | | % | 0.05 | 0.05 | 0.05 | 0.05 | 0.05 | 0.05 |
| UVA | | % | 0.15 | 0.15 | 0.15 | 0.15 | 0.15 | 0.15 |
| PC-2 | | % | 23 | | 23.08 | 20.05 | 22.07 | 22.06 |
| NBFG | | % | 9 | 9 | 9 | 9 | 9 | 9 |
| PC-Si | | % | 12 | 12 | 12 | 12 | 12 | 12 |
| PC-3 | | % | 27 | 27 | 27 | 27 | 27.0 | 27 |
| Pigment Blue 29 | | % | | | | | | |
| Titanium Dioxide | | % | | | | 3 | 0.02 | 0.02 |
| Pigment Black 7 | | % | | | | | | 1 |
| Solvent Yellow 163 | | % | | | | | 0.33 | |
| Solvent Blue 104 | | % | | | | | 0.33 | |
| Solvent Red 207 | | % | | | | | 0.33 | |
| Pigment Yellow 138 | | % | | | | 0.03 | | |
| Total | | % | 100 | 100 | 100 | 100 | 100 | 100 |

| Properties | | | | | | | | |
|---|---|---|---|---|---|---|---|---|
| MVR at 300°C, 1.2 kg, 300 see | | cm710 min | 3.9 | 5.5 | 4.9 | 4.0 | 5.2 | 4.2 |
| MVR at 330°C, 1.2 kg, 300 see | | cm710 min | 18.5 | 25.0 | 14.7 | 14.4 | 16.7 | 13.0 |
| IZOD INI (3 mm, 23°C) | | kJ/m² | 13 | 10 | 14 | 14 | 11 | 13 |
| BPT (150°C) | | | Pass | Pass | Pass | Pass | Pass | Pass |
| | | | | | | | | |
| UL-94 at 0.8 mm | FOT 23°C, 48 hr | | | | | | | |
| | St1 | s | 29 | 40 | 24 | 35 | 33 | 12 |
| | St2 | s | 27 | 13 | 22 | 62 | 15 | 26 |
| | S (t1 + t2) | s | 56 | 53 | 46 | 97 | 48 | 38 |
| | V-rating | | V1 | V1 | V0 | V1 | V1 | V0 |
| UL-94 at 0.8 mm | FOT 70°C, 168 hr | | | | | | | |
| | S t1 | s | 29 | 25 | 18 | 32 | 42 | 10 |
| | S t2 | s | 59 | 48 | 45 | 34 | 26 | 29 |
| | S (t1 + t2) | s | 88 | 73 | 63 | 66 | 68 | 39 |
| | V-rating | | V1 | V1 | V1 | V0 | V1 | V0 |
| UL-94 at 1.2 mm | FOT 23°C, 48 hr | | | | | | | |
| | S t1 | s | 12 | 14 | 14 | 8 | 8 | 6 |
| | S t2 | s | 22 | 25 | 23 | 23 | 22 | 9 |
| | S (t1 + t2) | s | 34 | 39 | 37 | 31 | 30 | 15 |
| | V-rating | | V0 | V0 | V0 | V0 | V0 | V0 |
| UL-94 at 1.2 mm | FOT 70°C, 168 hr | | | | | | | |
| | S t1 | s | 13 | 12 | 10 | 7 | 11 | 8 |
| | S t2 | s | 24 | 26 | 23 | 21 | 20 | 13 |
| | S (t1 + t2) | s | 37 | 38 | 33 | 28 | 31 | 21 |
| | V-rating | | V0 | V0 | V0 | V0 | V0 | V0 |

As can be seen from the data in Table 4, the preferred aspects yielded robust color and UL-94 performance (V1 at 0.8 mm and V0 at 1.2 mm) across the agency colors, at different conditioning parameters and viscosities as seen by modifying the polycarbonate molecular weight.

**Table 5**

| Component (%) | | Units | Ex9 | Ex10 | Ex11 | Ex12 | Ex13 |
|---|---|---|---|---|---|---|---|
| PC-1 | | % | 21 | 38.08 | 18 | 28 | 23.08 |
| KSS | | % | 0.16 | 0.16 | 0.16 | 0.16 | 0.16 |
| TSAN | | % | 0.5 | 0.5 | 0.5 | 0.5 | 0.5 |
| NaTS | | % | 0.15 | 0.15 | 0.15 | 0.06 | 0.06 |
| AO | | % | 0.05 | 0.05 | 0.05 | 0.05 | 0.05 |
| UVA | | % | 0.15 | 0.15 | 0.15 | 0.15 | 0.15 |
| PC-2 | | % | 17.08 | | 15.08 | 5.08 | |
| NBFG | | % | 15 | 15 | 20 | 20 | 30 |
| PC-Si | | % | 22 | 22 | 22 | 22 | 22 |
| PC-3 | | % | 24 | 24 | 24 | 24 | 24 |
| Total | | % | 100 | 100 | 100 | 100 | 100 |
| MVR at 300°C, 1.2 kg, 300 see | | cm³/10 min | 4.0 | 4.8 | 4.0 | 4.4 | 5.8 |
| MVR at 330°C, 1.2 kg, 300 see | | cm³/10 min | 8.7 | 14.1 | 14.6 | 14.8 | 18.3 |
| BPT (150°C) | | | Pass | Pass | Pass | Pass | Pass |
| VICAT (B/120) | | °C | 155 | 155 | 156 | 156 | 156 |
| IZOD INI (3 mm, 23°C) | | kJ/m² | 16 | 15 | 16 | 15 | 12 |
| UL-94 at 0.8 mm | FOT 23°C, 48 hr | | | | | | |
| | S t1 | s | 65 | 29 | 63 | 39 | 74 |
| | S t2 | s | 40 | 28 | 38 | 49 | 17 |
| | S (t1 + t2) | s | 106 | 57 | 101 | 88 | 90 |
| | V-rating | | V-1 | V-0 | V-1 | V1 | V1 |
| UL-94 at 1.2 mm | FOT 23°C, 48 hr | | | | | | |
| | S t1 | s | 10 | 11 | 25 | 25 | 64 |
| | S t2 | s | 30 | 37 | 57 | 53 | 71 |
| | S (t1 + t2) | s | 40 | 48 | 81 | 78 | 135 |
| | V-rating | | V1 | V1 | V1 | V1 | V1 |

As can be seen from the data in Table 5, the preferred aspects yielded the disclosed UL-94 performance (V1 at 0.8 mm and at 1.2 mm) at higher glass content.

The singular forms "a," "an," and "the" include plural referents unless the context clearly dictates otherwise. "Or" means "and/or" unless clearly indicated otherwise by context. A "combination thereof' is open and includes any combination comprising at least one of the listed components or properties optionally together with a like or equivalent component or property not listed The endpoints of all ranges directed to the same component or property are inclusive and independently combinable (e.g., ranges of "less than or equal to 25 wt%, or 5 wt% to 20 wt%," is inclusive of the endpoints and all intermediate values of the ranges of "5 wt% to 25 wt%," etc.). Disclosure of a narrower range or more specific group in addition to a broader range is not a disclaimer of the broader range or larger group.

The suffix "(s)" is intended to include both the singular and the plural of the term that it modifies, thereby including at least one of that term (e.g., the filler(s) includes at least one filler). "Optional" or "optionally" means that the subsequently described event or circumstance may or may not occur, and that the description includes instances where the event occurs and instances where it does not. Unless defined otherwise, technical and scientific terms used herein have the same meaning as is commonly understood by one of skill in the art to which this disclosure belongs. A "combination" is inclusive of blends, mixtures, alloys, reaction products, and the like. The terms "first," "second," and the like, "primary," "secondary," and the like, as used herein do not denote any order, quantity, or importance, but rather are used to distinguish one element from another.

As used herein, the term "hydrocarbyl" and "hydrocarbon" mean broadly a substituent comprising carbon and hydrogen, optionally with 1-3 heteroatoms, for example, oxygen, nitrogen, halogen, silicon, sulfur, or a combination thereof; "alkyl" means a straight or branched chain, saturated monovalent hydrocarbon group; "alkylene" means a straight or branched chain, saturated, divalent hydrocarbon group; "alkylidene" means a straight or branched chain, saturated divalent hydrocarbon group, with both valences on a single common carbon atom; "alkenyl" means a straight or branched chain monovalent hydrocarbon group having at least two carbons joined by a carbon-carbon double bond; "cycloalkyl" means a non-aromatic monovalent monocyclic or multicyclic hydrocarbon group having at least three carbon atoms, "cycloalkenyl" means a non-aromatic cyclic divalent hydrocarbon group having at least three carbon atoms, with at least one degree of unsaturation; "aryl" means an aromatic monovalent group containing only carbon in the aromatic ring or rings; "arylene" means an aromatic divalent group containing only carbon in the aromatic ring or rings; "alkylarylene" means an arylene group that has been substituted with an alkyl group, with 4-methylphenyl being an exemplary alkylarylene group; "arylalkylene" means an alkylene group substituted with an aryl group, with benzyl being an exemplary arylalkylene group; "acyl" means an alkyl group with the indicated number of carbon atoms attached through a carbonyl carbon bridge (-C(=O)-); "alkoxy" means an alkyl group with the indicated number of carbon atoms attached through an oxygen bridge (-O-); and "aryloxy" means an aryl group with the indicated number of carbon atoms attached through an oxygen bridge (-O-).

Unless otherwise indicated, each of the foregoing groups can be unsubstituted or substituted, provided that the substitution does not significantly adversely affect synthesis, stability, or use of the compound. The term "substituted" as used herein means that at least one hydrogen on the designated atom or group is replaced with another group, provided that the designated atom's normal valence is not exceeded. When the substituent is oxo (i.e., =O), then two hydrogens on the atom are replaced. Combinations of substituents or variables are permissible provided that the substitutions do not significantly adversely affect synthesis or use of the compound. Exemplary groups that can be present on a "substituted" position include, but are not limited to, cyano; hydroxyl; nitro; azido; alkanoyl (such as a C₂₋₆ alkanoyl group such as acyl); carboxamido; C₁₋₆ or C₁₋₃ alkyl, cycloalkyl, alkenyl, and alkynyl (including groups having at least one unsaturated linkages and from 2-8, or 2-6 carbon atoms); C₁₋₆ or C₁₋₃ alkoxys; C₆₋₁₀ aryloxy such as phenoxy; C₁₋₆ alkylthio; C₁₋₆ or C₁₋₃ alkylsulfinyl; C₁₋₆ or C₁₋₃ alkylsulfonyl; aminodi(C₁₋₆ or C₁₋₃)alkyl; C₆₋₁₂ aryl having at least one aromatic rings (e.g., phenyl, biphenyl, naphthyl, or the like, each ring either substituted or unsubstituted aromatic); C₇₋₁₉ arylalkylene having 1-3 separate or fused rings and from 6-18 ring carbon atoms; or arylalkyleneoxy having 1-3 separate or fused rings and from 6-18 ring carbon atoms, with benzyloxy being an exemplary arylalkyleneoxy.

## Claims

1. An article comprising a polycarbonate composition, the composition comprising
up to 60 wt% of a bisphenol A homopolycarbonate composition comprising a bisphenol A homopolycarbonate having a weight average molecular weight from 15,000-40,000 grams/mole as measured via gel permeation chromatography using bisphenol A homopolycarbonate standards;
7-30 wt% of a poly(carbonate-siloxane);
10-70 wt%, preferably 10-50 wt% of a high heat copolycarbonate having a glass transition temperature of 170°C or higher as determined per ASTM D3418 with a 20 °C/min heating rate;
0.05-0.7 wt% of a flame retardant salt;
5-45 wt% of glass fibers;
0.3-0.6 wt%, of an anti-drip agent; and
optionally, up to 10 wt% of an additive composition,
wherein each amount is based on the total weight of the polycarbonate composition, which sums to 100 wt%; and wherein a molded sample of the polycarbonate composition has
a Vicat B120 softening temperature of at least 150°C as measured according to ISO 306,
an Izod notched impact strength of greater than or equal to 10 kiloJoule per square meter as measured at 23°C according to ISO 180/1 A, and
a flame test rating of
V1 as measured according to UL-94 at 0.8 millimeter and 1.2 millimeter thickness, more preferably V0 at 1.2 millimeter.

2. The article of claim 1, wherein the bisphenol A homopolycarbonate composition comprises a first bisphenol A homopolycarbonate having a weight average molecular weight from 20,000-30,000 grams/mole, preferably 20,000-25,000 grams/mole, and a second bisphenol A homopolycarbonate having a weight average molecular weight from 25,000-35,000 grams/mole, preferably 27,000-32,000 grams/mole as measured via gel permeation chromatography using bisphenol A homopolycarbonate standards.

3. The article of any one of the preceding claims, wherein the polycarbonate composition comprises
up to 60 wt% of the bisphenol A homopolycarbonate composition;
10-30 wt% of the poly(carbonate-siloxane);
20-50 wt% of the high heat copolycarbonate;
0.3-0.6 wt%, of an anti-drip agent;
5-45 wt% of glass fibers; and
0.05-0.7 wt% of the flame retardant salt,
wherein each amount is based on the total weight of the polycarbonate composition, which sums to 100 wt% and wherein the polycarbonate composition comprises 2-4 wt% of siloxane.

4. The article of any one of the preceding claims, wherein the high heat copolycarbonate comprises
low heat aromatic carbonate units, preferably bisphenol A carbonate units; and
high heat aromatic carbonate units, preferably high heat aromatic carbonate units derived from 1,1-bis(4-hydroxyphenyl)-3,3,5-trimethyl-cyclohexane, N-phenyl phenolphthalein bisphenol, 4,4'-(1-phenylethylidene)bisphenol, 4,4'-(3,3-dimethyl-2,2-dihydro-1H-indene-1,1-diyl)diphenol, 1,1-bis(4-hydroxyphenyl)cyclododecane, 3,8-dihydroxy-5a,10b-diphenyl-coumarano-2',3',2,3-coumarane, or a combination thereof.

5. The article of any one of the preceding claims, wherein the high heat copolycarbonate comprises bisphenol A carbonate units and high heat aromatic carbonate units derived from 1,1-bis(4-hydroxyphenyl)-3,3,5-trimethyl-cyclohexane, N-phenyl phenolphthalein bisphenol, or a combination thereof.

6. The article of any one of the preceding claims, wherein the flame retardant salt comprises
a C₂₋₁₆ alkyl sulfonate, preferably potassium perfluorobutane sulfonate, potassium perfluoroctane sulfonate, or tetraethylammonium perfluorohexane sulfonate,
a salt of an aromatic sulfonate, preferably sodium benzene sulfonate or sodium toluene sulfonate,
a salt of an aromatic sulfone sulfonate, preferably a potassium diphenylsulfone sulfonate,
a salt formed by reacting for example an alkali metal or alkaline earth metal and an inorganic acid complex salt, preferably an alkali metal or alkaline earth metal salt of carbonic acid or a fluoro-anion complex such as Li₃AlF₆, BaSiF₆, KBF₄, K₃AlF₆, KAlF₄, K₂SiF₆, or Na₃AlF₆, or a combination thereof.

7. The article of claim 6, wherein the flame retardant salt is potassium perfluorobutane sulfonate, potassium diphenylsulfone sulfonate, sodium toluene sulfonate, or a combination thereof.

8. The article of any one of the preceding claims, wherein
the high heat copolycarbonate comprises bisphenol A carbonate units and high heat aromatic carbonate units derived from 1,1-bis(4-hydroxyphenyl)-3,3,5-trimethyl-cyclohexane, N-phenyl phenolphthalein bisphenol, or a combination thereof;
the flame retardant salt comprises a salt of an aromatic sulfone sulfonate and a salt of an aromatic sulfonate; and
the anti-drip agent is styrene-acrylonitrile-encapsulated poly(tetrafluoroethylene) copolymer.

9. The article of any one of the preceding claims, comprising
up to 60 wt% of a bisphenol A homopolycarbonate composition comprising a first bisphenol A homopolycarbonate having a weight average molecular weight from 20,000-30,000 grams/mole, preferably 20,000-25,000 grams/mole and a second bisphenol A homopolycarbonate having a weight average molecular weight from 25,000-35,000 grams/mole, preferably 27,000-32,000 grams/mole, as measured via gel permeation chromatography using bisphenol A homopolycarbonate standards;
10-20 wt% of a poly(carbonate-siloxane) containing 15-25 wt% siloxane;
20-30 wt% of a high heat copolycarbonate comprising bisphenol A carbonate units and high heat aromatic carbonate units derived from 1,1-bis(4-hydroxyphenyl)-3,3,5-trimethylcyclohexane, N-phenyl phenolphthalein bisphenol, or a combination thereof;
0.05-0.3 wt% of potassium perfluorobutane sulfonate, potassium diphenylsulfone sulfonate, sodium toluene sulfonate, or a combination thereof;
8-12 wt% of glass fibers;
0.01-1.0 wt% of a phosphite heat stabilizer; and
0.3-0.6 wt% of an anti-drip agent;
wherein each amount is based on the total weight of the polycarbonate composition, which sums to 100 wt%; and wherein a molded sample of the polycarbonate composition has
a Vicat B120 softening temperature of at least 150°C as measured according to ISO 306,
an Izod notched impact strength of greater than or equal to 10 kJ per square meter as
measured at 23°C according to ISO 180/1 A, and
a flame test rating of V1 as measured according to UL-94 at 0.8 millimeter and 1.2 millimeter thickness.

10. An article according to any one of the preceding claims wherein the composition comprises
up to 60 wt% of a bisphenol A homopolycarbonate composition comprising a bisphenol A homopolycarbonate having a weight average molecular weight from 15,000-40,000 grams/mole as measured via gel permeation chromatography using bisphenol A homopolycarbonate standards;
7-25 wt% of a poly(carbonate-siloxane);
10-70 wt%, preferably 10-50 wt% of a high heat copolycarbonate having a glass transition temperature of 170°C or higher as determined per ASTM D3418 with a 20 °C/min heating rate;
0.05-0.5 wt% of a flame retardant salt;
5-15 wt% of glass fibers;
0.3-0.6 wt%, of an anti-drip agent; and
optionally, up to 10 wt% of an additive composition,
wherein each amount is based on the total weight of the polycarbonate composition, which sums to 100 wt%; and wherein a molded sample of the polycarbonate composition has
a Vicat B120 softening temperature of at least 150°C as measured according to ISO 306, an Izod notched impact strength of greater than or equal to 10 kiloJoule per square meter as measured at 23°C according to ISO 180/1 A, and
a flame test rating of
V1 as measured according to UL-94 at 0.8 millimeter thickness, and
V0 as measured according to UL-94 at 1.2 millimeter thickness.

11. The article of any one of the preceding claims, wherein the article is a molded article, a thermoformed article, an extruded film, an extruded sheet, a foamed article, a layer of a multi-layer article, a substrate for a coated article, or a substrate for a metallized article.

12. The article of claim 10 or 11, wherein the article is a molded housing.

13. The article of claim 12, wherein the article is an electrical circuit housing.

14. A method for forming the article of any one of the preceding claims, comprising molding, casting, or extruding the article.

## Patentansprüche

1. Ein Artikel, der eine Polycarbonatzusammensetzung umfasst, wobei die Zusammensetzung Folgendes umfasst:
bis zu 60 Gewichtsprozent einer Bisphenol A-Homopolycarbonatzusammensetzung, die ein Bisphenol A-Homopolycarbonat umfasst, das ein Gewichtsmittel-Molekulargewicht von 15.000 - 40.000 g/mol hat, gemessen durch Gelpermeationschromatographie unter Anwendung von Bisphenol A-Homopolycarbonatstandards;
7-30 Gewichtsprozent eines Poly(carbonat-siloxans);
10-70 Gewichtsprozent, vorzugsweise 10-50 Gewichtsprozent, eines hochhitzebeständigen Copolycarbonats mit einer Glasübergangstemperatur von 170°C oder höher, bestimmt durch ASTM D3418 mit einer Erwärmungsgeschwindigkeit von 20°C/min;
0,05 - 0,7 Gewichtsprozent eines Flammverzögerungssalzes;
5-45 Gewichtsprozent Glasfasern;
0,3 - 0,6 Gewichtsprozent eines Antitropfmittels und
wahlweise bis zu 10 Gewichtsprozent einer Additivzusammensetzung;
wobei jede Menge auf dem Gesamtgewicht der Polycarbonatzusammensetzung basiert, welches insgesamt 100 Gewichtsprozent ausmacht; und wobei eine geformte Probe der Polycarbonatzusammensetzung Folgendes hat:
eine Vicat B120-Erweichungstemperatur von mindestens 150°C, gemessen nach ISO 306,
eine Izod-Kerbschlagzähigkeit von mindestens 10 Kilojoule pro Quadratmeter, gemessen bei 23°C nach ISO 180/1 A, und
einen Flammprobenwert von
V1, gemessen nach UL-94 bei einer Dicke von 0,8 Millimetern und 1,2 Millimetern, stärker bevorzugt V0 bei 1,2 Millimetern.

2. Der Artikel gemäß Anspruch 1, wobei die Bisphenol A-Homopolycarbonatzusammensetzung ein erstes Bisphenol A-Homopolycarbonat mit einem Gewichtsmittel-Molekulargewicht von 20.000 - 30.000 g/mol, vorzugsweise 20.000 - 25.000 g/mol, und ein zweites Bisphenol A-Homopolycarbonat mit einem Gewichtsmittel-Molekulargewicht von 25.000 - 35.000g/mol, vorzugsweise 27.000 - 32.000 g/mol, umfasst, gemessen durch Gelpermeationschromatographie unter Anwendung von Bisphenol A-Homopolycarbonatstandards.

3. Der Artikel gemäß einem beliebigen der obigen Ansprüche, wobei die Polycarbonatzusammensetzung Folgendes umfasst:
bis zu 60 Gewichtsprozent der Bisphenol A-Homopolycarbonatzusammensetzung;
10-30 Gewichtsprozent des Poly(carbonat-siloxans);
20-50 Gewichtsprozent des hochhitzebeständigen Copolycarbonats;
0,3-0,6 Gewichtsprozent eines Antitropfmittels;
5-45 Gewichtsprozent Glasfasern und
0,05-0,7 Gewichtsprozent des Flammverzögerungssalzes,
wobei jede Menge auf dem Gesamtgewicht der Polycarbonatzusammensetzung basiert, das insgesamt 100 Gewichtsprozent ausmacht, und wobei die Polycarbonatzusammensetzung 2-4 Gewichtsprozent Siloxan umfasst.

4. Der Artikel gemäß einem beliebigen der obigen Ansprüche, wobei das hochhitzebeständige Copolycarbonat Folgendes umfasst:
aromatische Niedertemperatur-Carbonateinheiten, vorzugsweise Bisphenol A-Carbonateinheiten, und
hochhitzebeständige aromatische Carbonateinheiten, vorzugsweise hochhitzebeständige aromatische Carbonateinheiten, die abgeleitet sind von 1,1-bis(4-Hydroxyphenyl)-3,3,5-trimethyl-cyclohexan, N-Phenylphenolphthaleinbisphenol, 4,4'-(1-Phenylethyliden)bisphenol, 4,4'-(3,3-Dimethyl-2,2-dihydro-1H-inden-1,1-diyl)diphenol, 1,1-bis(4-Hydroxyphenyl)cyclododecan, 3,8-Dihydroxy-5a,10b-diphenyl-cumarano-2' ,3' ,2,3-cumaran oder einer Kombination davon.

5. Der Artikel gemäß einem beliebigen der obigen Ansprüche, wobei das hochhitzebeständige Copolycarbonat Bisphenol A-Carbonateinheiten und hochhitzebeständige aromatische Carbonateinheiten umfasst, die abgeleitet sind von 1,1-bis(4-Hydroxyphenyl)-3,3,5-trimethyl-cyclohexan, N-Phenylphenolphthaleinbisphenol oder einer Kombination davon.

6. Der Artikel gemäß einem beliebigen der obigen Ansprüche, wobei das Flammverzögerungssalz Folgendes umfasst:
ein C₂₋₁₆-Alkylsulfonat, vorzugsweise Kaliumperfluorbutansulfonat, Kaliumperfluoroctansulfonat oder Tetraethylammoniumperfluorhexansulfonat,
ein Salz eines aromatischen Sulfonats, vorzugsweise Natriumbenzensulfonat oder Natriumtoluensulfonat,
ein Salz eines aromatischen Sulfonsulfonats, vorzugsweise ein Kaliumdiphenylsulfonsulfonat,
ein Salz, gebildet durch Reagieren von, zum Beispiel, einem Alkalimetall oder Erdalkalimetall und einem anorganischen Säurekomplexsalz, vorzugsweise einem Alkalimetall- oder Erdalkalimetallsalz von Kohlensäure oder einem Fluor-Anion-Komplex, wie zum Beispiel Li₃AlF₆, BaSiF₆, KBF₄, K₃AlF₆, KAlF₄, K₂SiF₆ oder Na₃AlF₆, oder einer Kombination davon.

7. Der Artikel gemäß Anspruch 6, wobei das Flammverzögerungssalz Kaliumperfluorbutansulfonat, Kaliumdiphenylsulfonsulfonat, Natriumtoluensulfonat oder eine Kombination davon ist.

8. Der Artikel gemäß einem beliebigen der obigen Ansprüche, wobei
das hochhitzebeständige Copolycarbonat Bisphenol A-Carbonateinheiten und hochhitzebeständige aromatische Carbonateinheiten umfasst, abgeleitet von 1,1-bis(4-Hydroxyphenyl)-3,3,5-trimethyl-cyclohexan, N-Phenylphenolphthaleinbisphenol oder einer Kombination davon;
das Flammverzögerungssalz ein Salz eines aromatischen Sulfonsulfonats und ein Salz eines aromatischen Sulfonats umfasst und
das Antitropfmittel Styren-Acrylonitril-verkapseltes Poly(tetrafluorethylen)-Copolymer ist.

9. Der Artikel gemäß einem beliebigen der obigen Ansprüche, der Folgendes umfasst:
bis zu 60 Gewichtsprozent einer Bisphenol A-Homopolycarbonatzusammensetzung, die ein erstes Bisphenol A-Homopolycarbonat mit einem Gewichtsmittel-Molekulargewicht von 20.000-30.000 g/mol, vorzugsweise 20.000-25.000 g/mol, und ein zweites Bisphenol A-Homopolycarbonat mit einem Gewichtsmittel-Molekulargewicht von 25.000-35.000 g/mol, vorzugsweise 27.000-32.000 g/mol, umfasst, gemessen durch Gelpermeationschromatographie unter Anwendung von Bisphenol A-Homopolycarbonatstandards;
10-20 Gewichtsprozent eines Poly(carbonat-siloxans), das 15-25 Gewichtsprozent Siloxan enthält;
20-30 Gewichtsprozent eines hochhitzebeständigen Copolycarbonats, das Folgendes umfasst: Bisphenol A-Carbonateinheiten und hochhitzebeständige aromatische Carbonateinheiten, abgeleitet von 1,1-bis(4-Hydroxyphenyl)-3,3,5-trimethyl-cyclohexan, N-Phenylphenolphthaleinbisphenol oder einer Kombination davon;
0,05-0,3 Gewichtsprozent Kaliumperfluorbutansulfonat, Kaliumdiphenylsulfonsulfonat, Natriumtoluensulfonat oder eine Kombination davon;
8-12 Gewichtsprozent Glasfasern;
0,01-1,0 Gewichtsprozent eines Phosphit-Wärmestabilisators und
0,3-0,6 Gewichtsprozent eines Antitropfmittels;
wobei jede Menge auf dem Gesamtgewicht der Polycarbonatzusammensetzung basiert, das insgesamt 100 Gewichtsprozent ausmacht; und wobei eine geformte Probe der Polycarbonatzusammensetzung Folgendes hat:
eine Vicat B120-Erweichungstemperatur von mindestens 150°C, gemessen nach ISO 306,
eine Izod-Kerbschlagzähigkeit von mindestens 10 kJ pro Quadratmeter, gemessen bei 23°C nach ISO 180/1 A, und
einen Flammprobenwert von V1, gemessen nach UL-94 bei einer Dicke von 0,8 Millimetern und 1,2 Millimetern.

10. Ein Artikel gemäß einem beliebigen der obigen Ansprüche, wobei die Zusammensetzung Folgendes umfasst:
bis zu 60 Gewichtsprozent einer Bisphenol A-Homopolycarbonatzusammensetzung, die ein Bisphenol A-Homopolycarbonat umfasst, das ein Gewichtsmittel-Molekulargewicht von 15.000 - 40.000 g/mol hat, gemessen durch Gelpermeationschromatographie unter Anwendung von Bisphenol A-Homopolycarbonatstandards;
7-25 Gewichtsprozent eines Poly(carbonat-siloxans);
10-70 Gewichtsprozent, vorzugsweise 10-50 Gewichtsprozent, eines hochhitzebeständigen Copolycarbonats mit einer Glasübergangstemperatur von 170°C oder höher, bestimmt durch ASTM D3418 mit einer Erwärmungsgeschwindigkeit von 20°C/min;
0,05 - 0,5 Gewichtsprozent eines Flammverzögerungssalzes;
5-15 Gewichtsprozent Glasfasern;
0,3 - 0,6 Gewichtsprozent eines Antitropfmittels und
wahlweise bis zu 10 Gewichtsprozent einer Additivzusammensetzung;
wobei jede Menge auf dem Gesamtgewicht der Polycarbonatzusammensetzung basiert, welches insgesamt 100 Gewichtsprozent ausmacht; und wobei eine geformte Probe der Polycarbonatzusammensetzung Folgendes hat:
eine Vicat B120-Erweichungstemperatur von mindestens 150°C, gemessen nach ISO 306,
eine Izod-Kerbschlagzähigkeit von mindestens 10 Kilojoule pro Quadratmeter, gemessen bei 23°C nach ISO 180/1 A, und
einen Flammprobenwert von
V1, gemessen nach UL-94 bei einer Dicke von 0,8 Millimetern, und
V0, gemessen nach UL-94 bei einer Dicke von 1,2 Millimetern.

11. Der Artikel gemäß einem beliebigen der obigen Ansprüche, wobei der Artikel ein Formteil, ein wärmegeformter Artikel, eine extrudierte Folie, eine extrudierte Platte, ein geschäumter Artikel, eine Schicht eines mehrschichtigen Artikels, ein Substrat für einen beschichteten Artikel oder ein Substrat für einen metallisierten Artikel ist.

12. Der Artikel gemäß Anspruch 10 oder 11, wobei der Artikel ein geformtes Gehäuse ist.

13. Der Artikel gemäß Anspruch 12, wobei der Artikel ein Gehäuse für einen elektrischen Schaltkreis ist.

14. Ein Verfahren zum Bilden des Artikels gemäß einem beliebigen der obigen Ansprüche, welches das Formen, Gießen oder Extrudieren des Artikels umfasst.

## Revendications

1. Article comprenant une composition de polycarbonate, la composition comprenant
jusqu'à 60 % en poids d'une composition d'homopolycarbonate de bisphénol A comprenant un homopolycarbonate de bisphénol A ayant un poids moléculaire moyen en poids de 15 000 à 40 000 grammes/mole tel que mesuré par chromatographie par perméation de gel en utilisant des étalons d'homopolycarbonate de bisphénol A ;
de 7 à 30 % en poids d'un poly(carbonate-siloxane) ;
de 10 à 70 % en poids, de préférence de 10 à 50 % en poids d'un copolycarbonate à haute température ayant une température de transition vitreuse de 170 °C ou plus telle que déterminée selon la norme ASTM D3418 avec une vitesse de chauffage de 20 °C/min ;
de 0,05 à 0,7 % en poids d'un sel ignifuge ;
de 5 à 45 % en poids de fibres de verre ;
de 0,3 à 0,6 % en poids, d'un agent anti-goutte ; et
éventuellement, jusqu'à 10 % en poids d'une composition d'additif,
dans lequel chaque quantité est basée sur le poids total de la composition de polycarbonate, qui représente 100 % en poids ; et dans lequel un échantillon moulé de la composition de polycarbonate a
une température de ramollissement Vicat B120 d'au moins 150 °C telle que mesurée selon la norme ISO 306,
une résistance aux chocs Izod supérieure ou égale à 10 kiloJoules par mètre carré telle que mesurée à 23 °C selon la norme ISO 180/1 A, et
un test de flamme de
V1 tel que mesuré selon la norme UL-94 à 0,8 millimètre et 1,2 millimètre d'épaisseur, plus préférablement V0 à 1,2 millimètre.

2. Article selon la revendication 1, dans lequel la composition d'homopolycarbonate de bisphénol A comprend un premier homopolycarbonate de bisphénol A ayant un poids moléculaire moyen en poids de 20 000 à 30 000 grammes/mole, de préférence de 20 000 à 25 000 grammes/mole, et un second homopolycarbonate de bisphénol A ayant un poids moléculaire moyen en poids de 25 000 à 35 000 grammes/mole, de préférence de 27 000 à 32 000 grammes/mole, tels que mesurés par chromatographie par perméation de gel en utilisant des étalons d'homopolycarbonate de bisphénol A.

3. Article selon l'une quelconque des revendications précédentes, dans lequel la composition de polycarbonate comprend
jusqu'à 60 % en poids de la composition d'homopolycarbonate de bisphénol A ;
de 10 à 30 % en poids du poly(carbonate-siloxane) ;
de 20 à 50 % en poids du copolycarbonate à haute température ;
de 0,3 à 0,6 % en poids, d'un agent anti-goutte ;
de 5 à 45 % en poids de fibres de verre ; et
de 0,05 à 0,7 % en poids du sel ignifuge,
dans lequel chaque quantité est basée sur le poids total de la composition de polycarbonate, qui représente 100 % en poids et dans lequel la composition de polycarbonate comprend de 2 à 4 % en poids de siloxane.

4. Article selon l'une quelconque des revendications précédentes, dans lequel le copolycarbonate à haute température comprend
des motifs de carbonate aromatique à basse température, de préférence des motifs de carbonate de bisphénol A ; et
des motifs de carbonate aromatique à haute température, de préférence des motifs de carbonate aromatique à haute température dérivés du 1,1-bis(4-hydroxyphényl)-3,3,5-triméthyl-cyclohexane, du N-phénylphénolphtaléine bisphénol, du 4,4'-(1-phényléthylidène)bisphénol, du 4,4'-(3,3-diméthyl-2,2-dihydro-1H-indène-1,1-diyl)diphénol, du 1,1-bis(4-hydroxyphényl)cyclododécane, du 3,8-dihydroxy-5a,10b-diphényl-coumarano-2',3',2,3-coumarane ou une combinaison de ceux-ci.

5. Article selon l'une quelconque des revendications précédentes, dans lequel le copolycarbonate à haute température comprend des motifs de carbonate de bisphénol A et des motifs de carbonate aromatique à haute température dérivés du 1,1-bis(4-hydroxyphényl) -3,3,5-triméthyl-cyclohexane, du N-phénylphénolphtaléine bisphénol ou d'une combinaison de ceux-ci.

6. Article selon l'une quelconque des revendications précédentes, dans lequel le sel ignifuge comprend un alkylsulfonate en C₂₋₁₆, de préférence le perfluorobutane sulfonate de potassium, le perfluoroctane sulfonate de potassium ou le perfluorohexane sulfonate de tétraéthylammonium,
un sel d'un sulfonate aromatique, de préférence le benzène sulfonate de sodium ou le toluène sulfonate de sodium,
un sel d'un sulfone sulfonate aromatique, de préférence un diphénylsulfone sulfonate de potassium,
un sel formé en faisant réagir par exemple un métal alcalin ou un métal alcalino-terreux et un sel de complexe d'acide inorganique, de préférence un sel de métal alcalin ou de métal alcalino-terreux d'acide carbonique ou d'un complexe fluoro-anionique tel que Li₃AlF₆, BaSiF₆, KBF₄, K₃AlF₆, KAlF₄, K₂SiF₆ ou Na₃AlF₆ ou une combinaison de ceux-ci.

7. Article selon la revendication 6, dans lequel le sel ignifuge est le perfluorobutane sulfonate de potassium, le diphénylsulfone sulfonate de potassium, le toluène sulfonate de sodium ou une combinaison de ceux-ci.

8. Article selon l'une quelconque des revendications précédentes, dans lequel
le copolycarbonate à haute température comprend des motifs de carbonate de bisphénol A et des motifs de carbonate aromatique à haute température dérivés du 1,1-bis(4-hydroxyphényl)-3,3,5-triméthyl-cyclohexane, du N-phénylphénolphtaléine bisphénol ou d'une combinaison de ceux-ci ;
le sel ignifuge comprend un sel d'un sulfone sulfonate aromatique et un sel d'un sulfonate aromatique ; et
l'agent anti-goutte est un copolymère de styrène-acrylonitrile-poly(tétrafluoroéthylène) encapsulé.

9. Article selon l'une quelconque des revendications précédentes, comprenant
jusqu'à 60 % en poids d'une composition d'homopolycarbonate de bisphénol A comprenant un premier homopolycarbonate de bisphénol A ayant un poids moléculaire moyen en poids de 20 000 à 30 000 grammes/mole, de préférence de 20 000 à 25 000 grammes/mole et un second homopolycarbonate de bisphénol A ayant un poids moléculaire moyen en poids de 25 000 à 35 000 grammes/mole, de préférence de 27 000 à 32 000 grammes/mole, tels que mesurés par chromatographie par perméation de gel en utilisant des étalons d'homopolycarbonate de bisphénol A ;
de 10 à 20 % en poids d'un poly(carbonate-siloxane) contenant de 15 à 25 % en poids de siloxane ;
de 20 à 30 % en poids d'un copolycarbonate à haute température comprenant des motifs de carbonate de bisphénol A et des motifs de carbonate aromatique à haute température dérivés du 1,1-bis(4-hydroxyphényl)-3,3,5-triméthylcyclohexane, du N-phénylphénolphtaléine bisphénol ou d'une combinaison de ceux-ci ;
de 0,05 à 0,3 % en poids de perfluorobutane sulfonate de potassium, de diphénylsulfone sulfonate de potassium, de toluène sulfonate de sodium ou d'une combinaison de ceux-ci ;
de 8 à 12 % en poids de fibres de verre ;
de 0,01 à 1,0 % en poids d'un stabilisant thermique à base de phosphite ; et
de 0,3 à 0,6 % en poids d'un agent anti-goutte ;
dans lequel chaque quantité est basée sur le poids total de la composition de polycarbonate, qui représente 100 % en poids ; et dans lequel un échantillon moulé de la composition de polycarbonate a
une température de ramollissement Vicat B120 d'au moins 150 °C telle que mesurée selon la norme ISO 306,
une résistance aux chocs Izod supérieure ou égale à 10 kJ par mètre carré telle que mesurée à 23 °C selon la norme ISO 180/1 A, et
un test de flamme de V1 tel que mesuré selon la norme UL-94 à 0,8 millimètre et 1,2 millimètre d'épaisseur.

10. Article selon l'une quelconque des revendications précédentes, dans lequel la composition comprend
jusqu'à 60 % en poids d'une composition d'homopolycarbonate de bisphénol A comprenant un homopolycarbonate de bisphénol A ayant un poids moléculaire moyen en poids de 15 000 à 40 000 grammes/mole tel que mesuré par chromatographie par perméation de gel en utilisant des étalons d'homopolycarbonate de bisphénol A ;
de 7 à 25 % en poids d'un poly(carbonate-siloxane) ;
de 10 à 70 % en poids, de préférence 10 à 50 % en poids d'un copolycarbonate à haute température ayant une température de transition vitreuse de 170 °C ou plus telle que déterminée selon la norme ASTM D3418 avec une vitesse de chauffage de 20 °C/min ;
de 0,05 à 0,5 % en poids d'un sel ignifuge ;
de 5 à 15 % en poids de fibres de verre ;
de 0,3 à 0,6 % en poids, d'un agent anti-goutte ; et
éventuellement, jusqu'à 10 % en poids d'une composition d'additif,
dans lequel chaque quantité est basée sur le poids total de la composition de polycarbonate, qui représente 100 % en poids ; et dans lequel un échantillon moulé de la composition de polycarbonate a
une température de ramollissement Vicat B120 d'au moins 150 °C telle que mesurée selon la norme ISO 306,
une résistance aux chocs Izod supérieure ou égale à 10 kiloJoules par mètre carré telle que mesurée à 23 °C selon la norme ISO 180/1 A, et
un test de flamme de
V1 tel que mesuré selon la norme UL-94 à 0,8 millimètre d'épaisseur, et
V0 tel que mesuré selon la norme UL-94 à 1,2 millimètre d'épaisseur.

11. Article selon l'une quelconque des revendications précédentes, dans lequel l'article est un article moulé, un article thermoformé, un film extrudé, une feuille extrudée, un article expansé, une couche d'un article multicouche, un substrat pour un article enduit ou un substrat pour un article métallisé.

12. Article selon la revendication 10 ou 11, dans lequel l'article est un boîtier moulé.

13. Article selon la revendication 12, dans lequel l'article est un boîtier de circuit électrique.

14. Procédé pour former l'article selon l'une quelconque des revendications précédentes, comprenant le moulage, le coulage ou l'extrusion de l'article.
